# EUROPEAN PATENT APPLICATION

(11) **EP 3 579 170 A1**
(43) Date of publication of application: **11.12.2019**
(21) Application number: 18189452.8
(22) Date of filing: 17.08.2018
(51) Int. Cl.: G06Q 30/06, H04N 21/4725, H04N 21/478, H04N 21/4782

(54) **ONLINE VIDEO PURCHASING PLATFORM**

(30) Priority: 02.05.2018 TR 201806213
(71) Applicant: Smartover Yazilim A.S., Bursa (TR)
(72) Inventor: Bilir, Murat, BURSA (TR); Çibuk, Muhammed Faruk, BURSA (TR)

(57) **Abstract**

The invention is related to a platform which comprises a device having at least one screen, which enables transmitting the data created in a content database by a web server in connection with a video and enables to perform purchasing by selecting the items determined on said video.

## Description

### TECHNICAL FIELD

The invention is related to a platform which provides the selection of the determined items by means of the developed player upgrade and the rapid application of detailed information on the selected items and the purchasing options in online videos.

The invention is especially related to a platform which enables the selection of items intended to be sold via the video window panel and enables to perform rapid sales of said items that can be seen on the same window panel.

### PRIOR ART

With the improvement of technology and internet use, online shopping has replaced most of the physical shopping. Especially, as there is no need for setup and management costs and being able to supply low prices products with high number of stock has directed sellers to online shopping. Similarly, the consumers tend to prefer online shopping since the time and research efforts they need to put in, is reduced.

With the popularity of online shopping platforms, the consumers can supply products from the shopping sites presented online, from electronics to white household appliances and from clothes to food. One of the factors causing the popularity of online shopping is the delivery of the products on very short notice, by means of the improved courier service infrastructures.

Similarly, with the improvement of the internet network, television broadcasting in which television is watched on the conventional satellite or terrestrial broadcasts is gradually replaced by cable TV and IPTV technology. In addition, a large section of the community watches TV series and movies on platforms which provide webcasts. Said internet platforms especially tend to place advertisements by means of product placement, in order to avoid bothering the audience, instead of providing conventional advertisements. The fact that the audience demands to view fewer advertisements while watching a movie or TV series and considers the advertisements as boring and a loss of time affects the revenue of producer companies. For this reason, said advertisements catch the attention of the audience especially regarding electronic supplies and/or ready-to-wear products such as clothes. Keeping up with fashion intensively and new clothing styles from brands presented by celebrities urge the audience to purchase these. However, for the products desired to be at the shops does not have high success rates as much, as people do not always wish to go to stores and shop.

The consumers need to find the products they liked in the advertisements by going to the websites of the related manufacturer or different sellers and browse between categories one by one and this process can result in failure for some users.

Especially the increase of misleading internet information makes it harder to find the products and as there is competition in the internet environment, similar to the market, this causes the consumers to face misleading results.

In the prior technique, a lot of paid or free platforms in which many shows/movies are presented are available. In addition, the increase in the tendency to watch online videos and the increase of vlogs causes the commercials to increase and this shows that an innovation is needed in this field.

Some of the platforms put into service in our country and abroad are as follows: Netflix® and amazon TV® are the leaders of TV series and movie broadcasting companies and Google® and Youtube® are the most used platforms in the world for online videos. The number of similar platforms in our country, many of which are small-scale but in high demand, has been increasing day by day.

In said platforms, sponsorships and product placements are commonly used as advertisements. In addition, ads are presented by means of banners opening up from a certain part of the screen for determined periods during video streaming. Said banners in webcasts can take the user to the target link interactively. However, this is not as much possible for some TV platforms. In addition, commercial breaks for a certain period of time during broadcasting are also one of the commercial presentation methods.

In the Youtube ® platform intensively used in the world, in certain areas on the video, a selectable text, a small window or a visual image pops up. These pop-ups stay active for a determined period of time and they are shown in determined sequences. The target links are placed on the mentioned window or text. When the user clicks on said link, a different video can open up in the same window or the user may be directed to the desired site by an external link. Using this method in the advertisements is not a practical method for the user and does not provide fully interactive commercial broadcasting.

In consequence, all the problems mentioned above have made it necessary to provide an innovation in the related field.

### THE PURPOSE OF THE INVENTION

The present invention necessitates the elimination of the above-mentioned problems and to carry out a technical innovation in the related field.

The main purpose of the invention is to set forth a platform structure which enables the opportunity for the audience to watch sales-oriented interactive videos which is the primary purpose of advertisements by eliminating the standard commercial use in TV series and movies.

Another purpose of the invention is to provide the opportunity for the audience to select and rapidly purchase the product which has advertisement content according to the interests of the audience by providing the selection and sales application presented by the platform by shortening the product placement in TV series and movies.

Another purpose of the invention is to provide the opportunity of carrying out personal shopping in accordance with the interests of the audience while they are watching TV series, movies or videos.

Another purpose of the invention is to be able to provide detailed information regarding the product, on the screen that is opened related to the selectable product that is advertized when the video is being watched.

Another purpose of the invention is to enable the viewers to rapidly buy the products they have liked during their daily watching activity.

Another purpose of the invention is to enable the users who do not wish to do online shopping to save the related products to a database by making a favorite list. By this means, the users can buy the products they like in the store.

Another purpose of the invention is to protect personal data and save the data to a database, to enable processing and categorizing the data (data mining) according to the interests of the audience and providing the opportunity for the related brands to present advertisements (promotion campaigns) in accordance with the interests of the persons according to the data use agreement.

Another purpose of the invention is to be able to analyze the points of interests of people.

Another purpose of the invention is to set forth data that can direct the preferences regarding the product groups for which advertisements shall be carried out for producing companies following the analyses that are carried out.

Another purpose of the invention is to enable rapid sales procedures with a single click by storing the payment and address details of people by means of the secure platform that shall be formed.

Another purpose of the invention is to enable to generate product and purchasing information on the same video screen without causing any disruption to the video that will be used, in accordance with the developed platform.

Another purpose of the invention is to enable to save data entry related to the products to be sold in a database via the user-friendly interface.

Another purpose of the invention is, to enable videos, movies and TV series to be watched via said device and to enable shopping by means of said device at the same time through the platform integrated on the device.

### BRIEF DESCRIPTION OF THE INVENTION

In order to achieve all of the above purposes which will be presented in the detailed description below, the present invention provides a platform and device which enables to carry out sales via videos.

The invention is related to a platform which enables the users to watch videos online, which also enables the users to purchase the items shown during video streaming which have been pre-determined according to the videos that have been watched before, or to form a database related to the items which the users are interested in; characterized in that it comprises at least one content database, a web server which enables the video to be transmitted to the clients together with the mentioned database, a video player device which enables the user to select and oversee the determined items on the device when he/she pauses the data received from the mentioned web server.

The invention is a method which enables the users to be able to watch videos online, which enables the users to purchase the items on the video which were previously determined in accordance with the interactive videos that were watched before, or which creates a database related to the items which the users are interested in; characterized in that it comprises the procedure steps of,
▪ Uploading the promotional video belonging to the company to the system
▪ Forming a content database by processing the coordinate information of the products together with the time (frame) information of the introductive video
▪ Adding the product information to the content database
▪ Transmitting the video by the web server together with the content database
▪ Viewing of the video by means of the web video player located in the device by the user
▪ The selectable items becoming apparent on the video screen as a result of the user pausing the video
▪ The details related to the item the user has chosen popping up in the video window
▪ Storing the processes of the user on the video in the logical database

The invention is a method which enables the user to purchase the product from the details related to the item on the popped up video window or to add the product to the follow list.

The invention is a method which enables to place an order for a product by ensuring multiple items which are pre-defined on the frame in said sequence come into focus and are selected in the case that the video is paused.

The invention is a method which enables processing the data saved on the logical database and informing the user by SMS or e-mail at a later time.

The invention is a method which enables processing the data saved on the logical database and performing user-based or product-based analysis by the product developer or the marketing company.

The invention is a method which informs the user as a result of their data saved on the logical database by detecting the user activity near the store by means of mobile operator data or beacons.

The invention is a method which detects the location of the user through NFC.

The invention comprises a device which can communicate with a database by means of at least a web server, which allows selecting items that have been pre-determined on the video while the video is being played, enables to open a new menu on the screen following the selection, and allows a rapid order to be placed from said menu.

The invention is related to a device configuration which is suitable to the HTML5 platform, having at least one screen, at least one processor, at least an ethernet card or a WIFI card which allows videos to be played, and which is characterized in that it allows to select items that have been pre-determined on the video while the video is being played, enables to open a new menu on the screen following the selection, and allows a rapid order to be placed from said menu and communicates with the database via at least a web server.

The invention is a device which comprises at least one input device and one screen, characterized in that it comprises a database server which enables to store pre-determined data belonging to a video on the web server, that enables products shown when the video is being played to be selected on the video, a logical database that enables to record the processes carried out by the user on the video and a Bluetooth based communication device which enables the product store to be informed following the processes of the user, wherein the system enables the users to watch videos online, which enables the users to purchase the items on the video which were pre-determined in accordance with the videos that were watched, or enables to form a database related to the items which the users are interested in.

The scope of protection of the patent is indicated in the claims and cannot be limited to what has been described for illustration purposes in this brief description and detailed description document. It is clear that a person skilled in the art can set forth similar embodiments in the light of the above described information, without departing from the main theme of the invention.

### BRIEF DESCRIPTION OF THE FIGURES

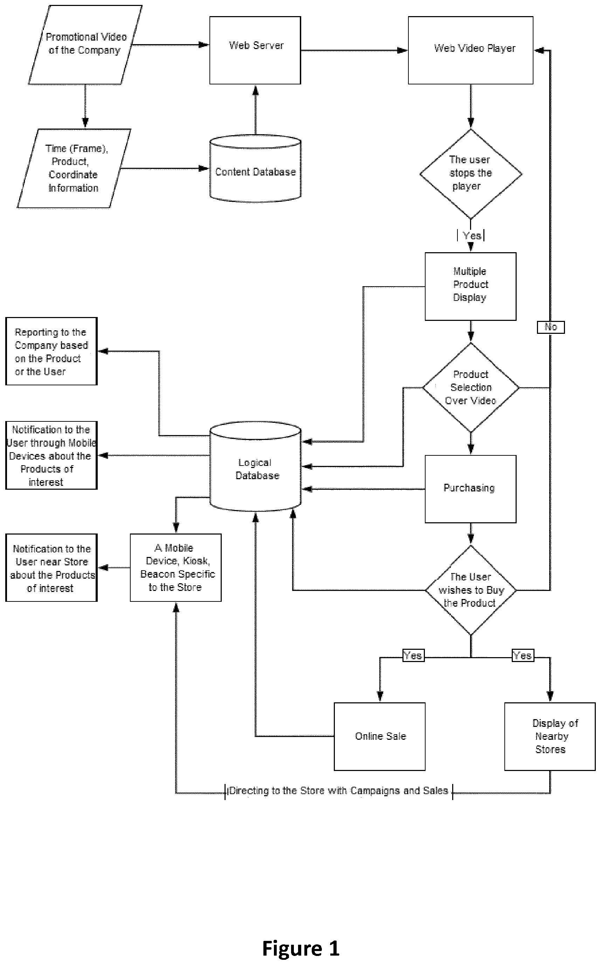

In Figure 1, a flow diagram which illustrates the operation of the platform is given.

### DETAILED DESCRIPTION OF THE INVENTION

In this detailed description, the **video sales platform** subject to the invention is described with examples which have been provided to ensure better understanding of the subject matter and which should not be regarded as limiting the scope of the invention.

The subject of the invention is related to a platform which is suitable for particularly online movies and TV series platforms, which allows selecting items that are aimed to be sold on the video and to rapidly perform sales on the same window.

The invention is characterized in that, while a video is being played on the screen it, allows the selection of items which were pre-determined on the mentioned video, enables a new menu to be opened on the screen as a result of the selection and enables placing an order rapidly from the mentioned menu and which is able to communicate with a database through at least one web server.

The invention is characterized in that it comprises at least one content database, a web server which enables the video to be transmitted to the clients together with the mentioned database, a video player device which enables the user to select and oversee the determined items on the player when he/she pauses the data received from the mentioned web server.

The invention comprises a device which has at least one database and an interactive player which operates with CSS and HTML 5 operating in relation to the mentioned database.

The mentioned device enables the items determined on the videos played through http or https protocols to be selected and purchased rapidly. The mentioned platform also enables to carry out a shopping analysis by saving the product groups purchased or viewed by selecting. By this means, the manufacturer and seller companies are enabled to improve their marketing methods.

The platform is composed of an administrator panel and user interface in general. The mentioned interface which is on the user part is generally used as a video player. The mentioned video player enables for opening windows on the player and screening the product information on the windows and enables the purchasing procedure to be realized.

The administrator panel enables preparing a promotional video that will be used within the scope of the invention. Said video is usually the promotional video of the company. In said administrator panel, it is provided that the frames in which the product to be sold and/or advertised in the promotional video is present and the coordinate information of the location in which the product is present in the mentioned frames is processed in the database. By this means, the second (frame) of the video in which the products to be marketed are present and the area of the product/products are determined and it is provided that the interactive menu is created by selecting these parts. The information of the frame interval and location for each product can be manually entered into the database or provided by the administrator panel with ease.

In a preferred embodiment of the invention, it comprises one user database structure. In said user database, it is provided that the membership information of the users is stored. By this means, the products each user has selected or purchased can be analyzed by the manufacturing company and/or the marketing company. Depending on the analysis, suitable offers and purchasing options can be presented to the user.

The invention comprises a web server which can communicate with a content database and user database. The video and data are transmitted to the client device by using particular protocols via the mentioned web server. In the preferred embodiment of the invention, the web server transmits the videos to the clients via the HTML5 protocol.

The client device the invention has, comprises at least one screen and a tool which can provide input on the device by enabling operation on the menus on the mentioned screen. This tool can be a touch panel placed in parallel to the screen and it can be a keyboard or mouse which can send and receive signals back and forth from the device. The device the invention comprises has a video player structure which enables the video images on the screen to be presented to the user. The mentioned video player can be suitable for a web platform and it can be presented to the user as a fixed application on the device.

If the video played on the device the invention comprises is paused, it is provided that the information saved to the content database previously is presented to the user. If the video is paused, the frame information obtained when the video is paused is compared with the database and a selectable (clickable) structure is formed at the matching coordinates of the related. Within said structure, one or more selectable area structures are created. The selectable areas take place on the related product groups according to the frame information.

In the case that the user selects the selectable area, it is provided that a new window is opened on the screen in which the video player is present. At this point, said device also requests the information of said user from the user database through the web server. The user can see the detailed information regarding the related product in the opened window and can save the product to purchase it later or can complete his/her order by performing payment by choosing the purchase option at that moment.

The user can save his/her personal information (Address, phone, payment information etc.) in the user database when desired. Within the platform, the secure payment platforms in the prior art can be used. By this means, it is enabled for the user to be able to place an order with a single click without entering credit card information. Said platforms may be the inter-bank common payment platform, the common payment platform of the credit card companies, payment by crypto currency and/or mobile payment. With the payment information being saved beforehand, it is provided that the user carries out payment with a single click rapidly without pausing the videos such as a TV series or a movie they have been watching for a long time and the user can continue to watch the video. With said structure, it is enables for the desired product to be purchased rapidly while watching a video and while the video watching activity is continued.

In a preferred embodiment of the invention, in the window of the device that has been opened on the video player, the nearest store in which the product can be found is shown. With the menu selected on the window that pops-up on the screen, the nearest store related to the product can be seen on a map. The user can navigate through the said map. By this means, the user can easily access the stores in which the product he/she likes is found.

In the case that the user adds the product to the follow list, it can be provided that a promotion is sent along with the product and the product information by means of a beacon to the device the user has used or to the mobile communication device during the routine visit to the shopping center or said store. The beacons can be placed within the store, at the departments containing said product. By this means, it is provided that the user is reminded of the products he/she added to the follow list during any shopping the user does.

The operations of the user related to their shopping while watching videos (pausing the video, browsing the products, purchasing, adding to the follow list, obtaining store location data) are saved to the logical database. By means of this database, the tastes of the user, shopping history and other similar activities are traced and then this information can be used for marketing/advertisement and in addition, to carry out statistical analysis.

In a preferred embodiment of the invention, the device structure having at least one screen and input device can be placed in shopping centers and stores. By means of said device, the products the user is interested in are requested from the logical database and this enables the user to perform purchasing. By this means, the user can place their order in a rapid and interactive manner without spending time at the shopping center and can their products. In addition, by means of the devices at the shopping centers and stores, it is enabled for the user to be informed about the products they are interested in if they are visiting said shopping center or store for shopping at that time. In the preferred embodiments of the invention, the user can be directed to the area/section the product is found directly during shopping by means of said devices.

In another preferred embodiment of the invention, the device located in the mentioned store can be a tablet or a kiosk.

In a preferred embodiment of the invention, web platform configurations in which the user can update his/her personal information and can follow his/her order information is used. The mentioned web platform simultaneously communicates with the logical database the invention comprises. In addition, the user can purchase the products he/she has added to his/her list beforehand via the web platform.

By means of the logical database the invention comprises, it is provided that notifications are made by the company through SMS/e-mail regarding the current information on the products the user is interested in, such as campaigns/changes. In addition, product or user-based reporting can be made to the company by means of the database and therefore the company can perform statistical analysis. With the data, data mining can be conducted by analyzing the interests and social life of the users. By this means, the invention helps determining the marketing strategy of the company.

The procedure step the invention follows during the operation of the device comprises the procedure steps of;
▪ Uploading the promotional video of the company to the system
▪ Creating the content database by processing the coordinate information of the products together with the time (frame) information of the promotional video
▪ Adding the product information to the content database
▪ Transmitting the video via the web server together with the content database
▪ Enabling user to watch the video via the web video player on his/her device

The video is presented to the user through the following procedure steps.

When the user pauses the video, the following procedure steps are carried out via the video player.
▪ The products become selectable on the video player screen
▪ The user selects one of the products on the video
▪ A new window is opened on the same screen preferably on the player, related to the product the user has chosen
▪ The purchasing procedures are performed from the opened window
▪ The list related to the product from the opened window is recorded
▪ The information is saved on the logical database
▪ The order is placed or nearby stores are shown

By performing the above described procedure steps, the users order the products having a selectable visual image listed on the video they have been watching or they can save them in their list to purchase later.

The data stored in the logical database can be used with the purpose of carrying out notifications and sending campaigns to the user when necessary by the company. In addition, the product information the users have saved in their list are again stored in the logical database and the users can purchase the products they have liked in the store by means of a device or by a standard shopping method.

## Claims

1. A platform which enables the users to watch videos online, which enables the users to purchase the items on the video which were pre-determined in accordance with the videos that have been watched, or to form a database related to the items which the users are interested in, **characterized in that** it comprises at least a content database, a web server which enables the video to be transmitted to the clients together with the mentioned database, a video player device which enables the user to select and oversee the determined items on the device when he/she pauses the data received from said web server.

2. A method which enables the users to watch videos online, which to purchase the items on the video which were pre-determined in accordance with the interactive videos that have been watched, or to form a database related to the items which the users are interested in; **characterized in that** it comprises the procedure steps of,
• Uploading the promotional video belonging to the company to the system
• Forming a content database by processing the coordinate information of the products together with the time (frame) information of the introductive video
• Adding the product information to the content database
• Transmitting the video by the web server together with the content database
• Viewing of the video by means of the web video player located in the device by the user
• The selectable items becoming apparent on the video screen as a result of the user pausing the video
• Popping up of the details related to the item the user has chosen in the video window
• Storing the processes of the user on the video in the logical database.

3. A method according to the claim 2, which enables the user to purchase a product from the details related to the item in the popped-up video window or to add the product to the follow list.

4. A method according to claim 2, which enables a product to be ordered by providing multiple items which are defined beforehand on the frame in said sequence to come into focus and enabling them to be selected when the video is paused.

5. A method according to claim 2, which enables the data saved to the logical database to be processed and the user to be informed by SMS or e-mail at a later time.

6. A method according to claim 2, which enables user-based or product-based analysis to be carried out by the product developer or the marketing company by processing the data saved on the logical database.

7. A method according to claim 2, which enables to inform the users as a result of their data that has been saved on the logical database by detecting the movement of the user near the stores by means of mobile operator data or beacons.

8. A method according to claim 7, which enables detecting the location of the user via NFC.

9. A platform which enables purchasing the items on the video while the video is being watched according to claim 1, having a device that can communicate with a database via at least a web server, which allows for the user to select the items which were pre-determined on the mentioned video, while the video is being played on the screen thereof, which enables a new menu to be opened on the screen as a result of the selection and enables placing an order rapidly from the mentioned menu.

10. A device configuration which is suitable to the HTML5 platform, having at least one screen, at least one processor, at least an ethernet card or a WIFI card which allows videos to be played, and which is **characterized in that** it allows to select items that have been pre-determined on the video while the video is being played, enables to open a new menu on the screen following the selection, and allows a rapid order to be placed from said menu and communicates with the database via at least a web server.

11. A device which comprises at least one input device and one screen, **characterized in that** it comprises a database server which enables to store pre-determined data belonging to a video on the web server, that enables products shown when the video is being played to be selected on the video, a logical database that enables to record the processes carried out by the user on the video and a Bluetooth based communication device which enables the product store to be informed following the processes of the user, wherein the system enables the users to watch videos online, which enables the users to purchase the items on the video which were pre-determined in accordance with the videos that were watched, or enables to form a database related to the items which the users are interested in.
